# EUROPÄISCHE PATENTSCHRIFT

(11) **EP 2 863 022 B1**
(45) Veröffentlichungstag und Bekanntmachung des Hinweises auf die Patenterteilung: **06.03.2019**
(21) Anmeldenummer: 14175147.9
(22) Anmeldetag: 01.07.2014
(51) Int. Cl.: F01K 23/06

(54) **Antriebseinheit für ein Kraftfahrzeug**
Drive unit for a motor vehicle
Unité d'entraînement pour un véhicule automobile

(30) Priorität: 09.07.2013 DE 102013011477
(43) Veröffentlichungstag der Anmeldung: 22.04.2015
(73) Patentinhaber: Volkswagen Aktiengesellschaft, 38440 Wolfsburg (DE)
(72) Erfinder: Carstensen, Asmus, 38557 Osloss (DE); Dallmann, Marcus, 38527 Meine (DE); Fritzsche, Jörg, 38518 Gifhorn (DE); Herr, Andreas, Dr., 38442 Wolfsburg (DE); Käppner, Christoph, 38118 Braunschweig (DE); Schulenburg, Thomas, 38550 Isenbüttel (DE); Semke, Artur, 38446 Wolfsburg (DE); Volkmann, Jörg, Dr., 38459 Bahrdorf (DE)
(74) Vertreter: Bungartz, Florian

(56) Entgegenhaltungen:
- DE-A1-102010 033 659
- US-A1- 2009 277 173
- US-A1- 2011 094 227
- US-A1- 2012 111 003

## Beschreibung

Die Erfindung betrifft eine Antriebseinheit für ein Kraftfahrzeug.

Kraftfahrzeuge werden derzeit regelmäßig mittels Brennkraftmaschinen angetrieben, in denen Kraftstoffe verbrannt und die dabei freigesetzte Wärmeenergie teilweise in mechanische Arbeit umgewandelt wird. Der Wirkungsgrad von Hubkolben-Brennkraftmaschinen, die für den Antrieb von Kraftfahrzeugen nahezu ausschließlich eingesetzten werden, liegt bei ca. einem Drittel der eingesetzten Primärenergie. Demnach stellt zwei Drittel der bei der Verbrennung freigesetzten Wärmeenergie Abwärme dar, die entweder über die Motorkühlung oder den Abgasstrang als Verlustwärme an die Umgebung abgegeben wird.

Eine Nutzung dieser Abwärme stellt eine Möglichkeit dar, den Gesamtwirkungsgrad einer Antriebseinheit des Kraftfahrzeugs zu steigern und damit den Kraftstoffverbrauch zu senken.

Die DE 10 2008 028 467 A1 beschreibt eine Vorrichtung zur Nutzung von Abwärme einer Verbrennungskraftmaschine. Dazu ist in den Abgasstrang der Verbrennungskraftmaschine ein erster Wärmetauscher, der Verdampfer, einer Dampfkreisprozessvorrichtung integriert. Die in dem Wärmetauscher von dem Abgas auf ein Arbeitsmedium der Dampfkreisprozessvorrichtung übertragene Wärmeenergie wird in einer Expansionsvorrichtung teilweise in mechanische Energie umgewandelt, die beispielsweise zur Unterstützung des Antriebs eines Kraftfahrzeugs oder zur Erzeugung elektrischer Energie genutzt werden kann. Stromab der Expansionsvorrichtung wird das Arbeitsmedium in einem zweiten Wärmetauscher, dem Kondensator, abgekühlt, wobei es kondensiert. Über eine Speisepumpe erfolgt eine Druckerhöhung des Arbeitsmediums und dessen Zufuhr zu dem Verdampfer.

Der Kondensator wird von dem Kühlmittel eines Motorkühlkreislaufs der Verbrennungskraftmaschine gekühlt. Der Rücklauf des Kühlmittels von dem Kondensator ist mittels eines 3-Wege-Ventils so schaltbar, dass das Kühlmittel entweder vor dem Hauptkühler des Kraftfahrzeugs oder vor der Verbrennungskraftmaschine in den Motorkühlkreis eingeleitet wird. Dies ermöglicht, die Abwärme, die das Kühlmittel in dem Kondensator aufnimmt, in einer Warmlaufphase der Verbrennungskraftmaschine zur schnelleren Aufwärmung des Kühlmittels zu nutzen. Dabei ist in bekannter Weise vorgesehen, den Motorkühler durch einen Bypass zu umgehen, um eine in der Warmlaufphase ungewünschte Kühlung des Kühlmittels zu vermeiden. Durch die Nutzung der in dem Kondensator anfallenden Abwärme erreicht die Verbrennungskraftmaschine schneller ihre Betriebstemperatur, was folglich mit einem geringen Kraftstoffverbrauch und Schadstoffausstoß während der Warmlaufphase verbunden ist. Nach dem Erreichen der Betriebstemperatur kann das durch den Kondensator aufgewärmte Kühlmittel direkt vor dem Motorkühler in den Motorkühlkreis eingeleitet werden. Dadurch kann verhindert werden, dass die Abwärme aus dem Kondensator die Kühlleistung für die Verbrennungskraftmaschine vermindert. Andererseits kann aber auch vorgesehen sein, das aus dem Kondensator austretende Kühlmittel nach dem Erreichen der Betriebstemperatur direkt vor dem Verbrennungsmotor in den Motorkühlkreis einzuleiten. Dies kann vorgesehen sein, wenn die Motoraustrittstemperatur des Kühlmittels unter einen Sollwert abfällt, was beispielsweise bei längerer Bergabfahrt des Kraftfahrzeugs der Fall sein kann. Zusätzlich kann dann auch die Heizleistung einer Innenraumheizung, die auf einem Wärmetausch mit dem Motorkühlkreis beruht, verbessert werden.

Weiterhin ist es bekannt, Wärmespeicher, insbesondere Latent- oder chemische Wärmespeicher in den Motorkühlkreislauf zu intergieren (vgl. z.B. DE 10 2008 013 650 A1). Diese Wärmespeicher nehmen im Betrieb der Brennkraftmaschine nach dem Erreichen der Betriebstemperatur Wärme aus dem Abgas auf und speichern diese zwischen. Nach einem darauffolgenden Kaltstart der Brennkraftmaschine geben die Wärmespeicher die gespeicherte Wärme wieder in den Motorkühlkreislauf ab, wodurch die Warmlaufphase für die Brennkraftmaschine verkürzt wird.

Bekannt ist auch, beide Maßnahmen kombiniert bei einer Brennkraftmaschine einzusetzen, wobei keine Wechselwirkung zwischen dem Dampfkreisprozess und dem Wärmespeicher vorgesehen ist. Der Wärmespeicher ist dabei eine reine Kaltstartmaßnahme, während der Dampfkreisprozess erst nach dem Erreichen der Betriebstemperatur wirksam wird. Nachteilig bei diesen Systemen ist, dass sowohl der Verdampfer als auch der Wärmespeicher in den Abgasstrang integriert sind und mittels jeweils eines Bypasses umgehbar gemacht werden müssen, um bei Nichtnutzung eine Erhöhung des Abgasgegendrucks, den der Verdampfer und der Wärmespeicher bewirkt, zu vermeiden.

Eine alternative Kombination eines Dampfkreisprozess zur Abwärmenutzung aus dem Abgas und eines Wärmespeicher ist aus der DE 10 2007 033 611 A1 bekannt. Dort ist vorgesehen, in Betriebszuständen des Verbrennungsmotors, wenn die in dem Abgas enthaltene Wärmeenergie größer ist als die Wärmeenergie, die in dem Verdampfer auf das Arbeitsmedium maximal übertragbar ist, mittels entsprechend ausgebildeter Bypässe und Ventile einen Teil des Abgasstroms in den Wärmespeicher umzuleiten, um diesen "aufzuladen", sofern er nicht bereits vollständig "aufgeladen" ist. Andererseits ist vorgesehen, in Betriebszuständen des Verbrennungsmotors, wenn die Wärmeenergie des Abgases geringer als die im Verdampfer umsetzbare Wärmeenergie ist, das Abgas vorab durch den Wärmespeicher zu führen, um dieses zu erwärmen, wodurch der Dampfkreisprozess dann besser betrieben werden kann. Damit dadurch nicht eine unzulässige Abkühlung von Abgasnachbehandlungsvorrichtungen des Abgasstrangs verbunden ist, sind sowohl der Wärmespeicher als auch der Verdampfer stromab dieser Abgasnachbehandlungsvorrichtungen in den Abgasstrang integriert.

Eine dazu funktional ähnliche Brennkraftmaschine mit einer Dampfkreisprozessvorrichtung ist aus der DE 10 2009 035 522 A1 bekannt. Dort ist in die Dampfkreisprozessvorrichtung ein Dampfspeicher integriert, in dem Dampf in Zeiten, in denen dieser erzeugt aber nicht genutzt werden kann, zwischenspeichert wird. Der gespeicherte Dampf wird dem Dampfkreisprozess wieder zuführt, wenn mehr Dampf umgesetzt werden kann, als durch Nutzung von Abgasabwärme erzeugt werden kann.

Eine weitere alternative Kombination eines Dampfkreisprozess zur Abwärmenutzung aus dem Abgas und eines Wärmespeicher ist aus der DE 10 2011 076 054 A1 bekannt. Dabei ist vorgesehen, den Wärmespeicher in den Dampfkreis zu integrieren und von dem Arbeitsmedium des Dampfkreises beaufschlagen zu lassen. Dazu ist vorgesehen, einen Vorlauf zu dem Wärmespeicher zwischen dem Verdampfer und der Expansionsmaschine und einen Rücklauf zwischen der Expansionsvorrichtung und dem Kondensator in den Dampfkreis zu integrieren. Grundsätzlich soll dadurch die Wärme, die der Wärmespeicher nach einem Kaltstart der Brennkraftmaschine auf das Arbeitsmedium überträgt, in dem Verdampfer auf das Abgas übertragen werden, wodurch die Aufheizzeit für in dem Abgasstrang stromab des Verdampfers angeordnete Abgasnachbehandlungsvorrichtungen verkürzt werden kann. Weiterhin ist in der DE 10 2011 076 054 A1 offenbart, dass alternativ oder zusätzlich zu dem Aufwärmen des Abgases in der Warmlaufphase auch vorgesehen sein kein, dass die Abwärme aus dem Kondensator die Warmlaufphase der Brennkraftmaschine selbst verkürzt, indem der Kondensator von dem Kühlmittel des Motorkühlkreises gekühlt wird. Bei einer derartigen Nutzung des Arbeitsmediums kann auch vorgesehen sein, mittels einer Druckeinstelleinrichtung den Druck des Arbeitsmediums derart einzustellen, dass die Dampfphase temporär eliminiert wird und das Arbeitsmedium im gesamten Kreislauf in flüssiger Form zirkuliert.

Aus der US 2011/094227 A1 ist ein System zur Umwandlung von Wärmeenergie in elektrische Energie bekannt sein, wobei die Wärmeenergie von Abgas auf zwei kaskadenartig verschaltete Rankine-Kreisprozessvorrichtungen übertragen wird. Das Abgas stammt dabei von einer Kraftmaschine, beispielsweise einer Verbrennungskraftmaschine oder einer Gasturbine, eines Kraftwerks. Der Übergang der Wärmenicki von dem Abgas auf ein Arbeitsfluid der einen Kreisprozessvorrichtung erfolgt über einen Transferkreis, in dem ein Thermometer mittels einer Pumpe im Kreislauf gefördert wird.

Die DE 10 2010 033 659 A1 offenbart ein Verfahren und eine Vorrichtung zur Energierückgewinnung aus einem Abgasstrom eines Verbrennungsmotors, wobei Wärmeenergie des Abgasstroms zunächst in einem geschlossenen Jule-Kreisprozess genutzt wird, indem ein gasförmiges Arbeitsmedium in einem Verdichter, der demjenigen Wärmetauscher, in dem der Wärmeübergang von dem Abgasstrom erfolgt, vorgeschaltet ist, verdichtet und in einer diesem Wärmetauscher nachgeschalteten Turbine entspannt wird. Dem Jule-Kreisprozess ist ein Clausius-Rankine-Kreisprozess nachgeschaltet, der Wärmeenergie nutzt, die in einem Wärmetauscher auf ein Arbeitsmittel des Clausius-Rankine-Kreisprozesses übergeht. Dieser Wärmetauscher ist zwischen der Turbine und dem Verdichter in den Jule-Kreisprozess JK integriert.

Die US 2012/0111003 A1 beschreibt ein Verfahren und eine Vorrichtung zur Nutzung von Wärmeenergie eines Abgasstroms einer Brennkraftmaschine mittels einer Rankine-Kreisprozessvorrichtung, wobei Kühlwasser eines Kühlsystems, das auch zur Kühlung der Brennkraftmaschine genutzt wird, in einem Abgaswärmetauscher auf beispielsweise 130°C erhitzt wird, wobei das Kühlwasser zum Kochen gebracht wird. Wärmeenergie dieses kochenden Kühlwassers wird dann in einem ersten Wärmetauscher an ein Arbeitsmedium der Rankine-Kreisprozessvorrichtung übertragen, um dieses zu überhitzen. Anschließend strömt das Kühlwasser mit einer dann geringeren Temperatur in einen zweiten Wärmetauscher, der als Verdampfer der Rankine-Kreisprozessvorrichtung dient.

Ausgehend von diesem Stand der Technik lag der Erfindung die Aufgabe zugrunde, eine verbesserte Integration eines Dampfkreisprozesses in eine Antriebseinheit für ein Kraftfahrzeug anzugeben.

Diese Aufgabe wird durch eine Antriebseinheit gemäß dem unabhängigen Patentanspruch 1 gelöst. Vorteilhafte Ausgestaltungen davon sind Gegenstand der abhängigen Patentansprüche und ergeben sich aus der nachfolgenden Beschreibung der Erfindung.

Der Erfindung liegt die Erkenntnis zugrunde, dass bei einer gattungsgemäßen Antriebseinheit, wie sie aus der DE 10 2007 033 611 A1 bekannt ist, und die
- eine Brennkraftmaschine umfasst, die einen Verbrennungsmotor sowie einen Abgasstrang, über den Abgas aus dem Verbrennungsmotor abführbar ist, aufweist, und
- eine Kreisprozessvorrichtung umfasst, die zur Wandlung von Wärmeenergie des Abgases in einem rechtsläufigen thermodynamischen Kreisprozess in mechanische Arbeit einsetzbar ist, wobei der Kreisprozess
   - einen (direkten oder indirekten) Wärmeübergang von dem Abgas auf ein Arbeitsmedium in einer ersten Wärmetauschvorrichtung umfasst, wodurch die Temperatur und/oder der Druck des Arbeitsmediums erhöht wird,
   - eine Expansion des Arbeitsmediums in einer Expansionsvorrichtung zur Erzeugung der mechanischen Arbeit umfasst, und
   - einen (direkten oder indirekten) Wärmeübergang von dem Arbeitsmedium auf ein Kühlmedium in einer zweiten Wärmetauschvorrichtung umfasst,
der Wärmeübergang von dem Abgas auf das Arbeitsmedium mit Problemen verbunden sein kann, die eine aufwändige konstruktive Ausgestaltung der dabei eingesetzten Wärmetauschvorrichtung erforderlich machen kann. Dies gilt insbesondere dann, wenn die erste Wärmetauschvorrichtung direkt in den Abgasstrang integriert ist und somit die das Arbeitsmedium führende(n) Leitung(en) dieser Wärmetauschvorrichtung von dem Abgas umströmt werden. Die Leitungen und das darin geführte Arbeitsmedium können dann lokal Temperaturen von mehreren hundert Grad ausgesetzt sein. Dies stellt nicht nur eine erhebliche Anforderung an den strukturellen Aufbau der Wärmetauschvorrichtung sondern auch an das eingesetzte Arbeitsmedium. Beispielsweise ist in gattungsgemäßen Antriebseinheiten der Kreisprozess regelmäßig als Dampfkreisprozess ausgebildet. Die dazu eingesetzten Arbeitsmedien müssen Verdampfungs- und Kondensationstemperaturen aufweisen, die in relativ engen Grenzen liegen. Die hierzu vielfach eingesetzten organischen Arbeitsmedien weisen dadurch eine relative niedrige Zersetzungstemperatur auf, die während des Kreisprozesses nicht überschritten werden darf. Bei dem häufig für solche Kreisprozesse eingesetzten Ethanol liegt diese beispielsweise bei ca. 361°C. Die Einsetzbarkeit von Medien der NOVEC-Gruppe ist sogar auf unter 300°C beschränkt.

Um ein Erreichen der Zersetzungstemperatur des Arbeitsmediums zu vermeiden, ist es bekannt, bei einer gattungsgemäßen Antriebseinheit die in den Abgasstrang integrierte Wärmetauschvorrichtung bei zu hohen Abgastemperaturen durch einen Bypass umgehbar zu machen. Durch diese Ausgestaltung entfällt oder vermindert sich die Nutzung der anfallenden Abwärme, was den Gesamtwirkungsgrad der Antriebseinheit schlechter werden lässt.

Der Erfindung liegt der Gedanke zugrunde, diese Problematik zu umgehen, indem ein direkter Wärmeübergang von dem Abgas auf das Arbeitsmedium soweit vermieden wird, dass auch bei den höchsten auftretenden Abgastemperaturen die Zersetzungstemperatur des Arbeitsmediums nicht erreicht wird. Der Wärmeübergang erfolgt vielmehr indirekt über ein geeignetes Transfermedium, konkret eine Transferflüssigkeit, das/die somit als "Wärmedämpfer" dient. Durch das Transfermedium kann der Wärmeübergang gesteuert (z.B. durch eine Veränderung einer Fließgeschwindigkeit des Transfermediums) und damit ein gegebenenfalls stark schwankendes Wärmeangebot im Abgas "geglättet" werden. Zudem kann dadurch erreicht werden, dass der Wärmeübergang in dem zweiten Wärmetauscher, der vorzugsweise als Verdampfer fungiert, mit relativ konstanten Eintrittstemperaturen für das Arbeits- und das Transfermedium betrieben werden kann. Dies ermöglicht eine gute thermodynamische Auslegung des Verdampfers, da der Bereich des sogenannten Pinch-Points und die Zone, in der der Phasenwechsel zwischen flüssig und gasförmig des Arbeitsmediums vollzogen wird, relativ genau lokalisiert werden kann.

Umgesetzt wird dieser Grundgedanke der Erfindung bei einer gattungsgemäßen Antriebseinheit, indem eine erste Wärmetauschvorrichtung mit einem Transfermedium in Form eines temperaturfesten Thermoöls für den indirekten Wärmeübergang von dem Abgas auf das Arbeitsmedium eingesetzt wird.

Eine solche Wärmetauschvorrichtung weist mindestens einen ersten Wärmetauscher und mindestens einen zweiten Wärmetauscher auf, die über das Transfermedium und insbesondere einen Zwischenkreis mit dem Transfermedium wärmeleitend verbunden sind. In dem ersten Wärmetauscher erfolgt dann ein Übergang der Wärmeenergie von dem Abgas auf das Transfermedium und in dem zweiten Wärmetauscher der Übergang von Wärmeenergie von dem Transfermedium auf das Arbeitsmedium. Der Zwischenkreis kann dabei insbesondere auch noch eine Pumpe zum Umwälzen des Transfermediums und/oder einen Ausgleichsbehälter aufweisen.

Ein weiterer Vorteil eines solchen Zwischenkreises kann darin liegen, dass die Abwärme des Abgases an mehreren Stellen mittels mehrerer erster Wärmetauscher abgegriffen werden kann. Dies kann direkt durch die Anordnung eines Wärmetauschers in dem Abgasstrom oder indirekt, z.B. außenseitig an Abgas führenden Komponenten (z.B. Abgaskrümmer, Kühler einer (Hochdruck- und/oder Niederdruck-) Abgasrückführung des Abgasstrangs (ggf. auch des Motorkühlkreises, dessen Wärmeenergie auch aus dem Abgas stammt) erfolgen.

Durch die Zwischenschaltung des Transfermediums können noch weitere Vorteile erzielt werden. Insbesondere besteht die Möglichkeit, das Transfermedium weitgehend (über-)drucklos in dem Zwischenkreis vorzuhalten, wodurch vermieden werden kann, das ein Wärmetauscher, der direkt hohen Abgastemperaturen ausgesetzt ist, auch noch hochdruckfest ausgebildet sein muss. Bei gattungsgemäßen Antriebseinheiten ist dies regelmäßig der Fall, weil den dortigen, als Verdampfer ausgebildeten Wärmetauschern das Arbeitsfluid unter einem Druck von regelmäßig 25 bar bis 30 bar zugeführt wird. Der erhebliche konstruktive Aufwand, den solche sowohl temperatur- als auch druckfesten Wärmetauscher erforderlich machen, kann dadurch vermieden werden.

Bevorzugt kann vorgesehen sein, dass der Kreisprozess ein Dampfkreisprozess, insbesondere ein Clausius-Rankine-Prozess, ist, bei dem das Arbeitsmedium im flüssigen Zustand mittels einer Pumpe druckerhöht wird, in der ersten Wärmetauschvorrichtung verdampft und vorzugsweise überhitzt wird und in der zweiten Wärmetauschvorrichtung kondensiert.

In einer weiterhin bevorzugten Ausgestaltung der erfindungsgemäßen Antriebseinheit kann vorgesehen sein, dass ein Wärmespeicher in die Kreisprozessvorrichtung integriert ist, der zur (direkten oder indirekten) Aufnahme von Wärmeenergie aus dem Abgas und zur Abgabe der Wärmeenergie an das Arbeitsmedium vorgesehen ist.

Durch diese Ausgestaltung der Antriebseinheit wird ermöglicht, die in dem Wärmespeicher gespeicherte Wärmeenergie, beispielsweise nach einem Kaltstart der Brennkraftmaschine und/oder während eines Betriebs der Brennkraftmaschine mit geringer Last, was regelmäßig mit entsprechend geringen Abgastemperaturen verbunden ist, in den Kreisprozess zu überführen und dadurch den Kreisprozess zu unterstützen, der ansonsten gegebenenfalls wegen zu geringer Wärmeaufnahme aus dem Abgas (noch) nicht ausführbar wäre.

Besonders bevorzugt kann vorgesehen sein, dass der Wärmespeicher in die erste Wärmetauschvorrichtung und insbesondere in den Zwischenkreis intergiert ist. Dann kann der Wärmeübergang von dem Wärmespeicher auf das Arbeitsmedium dazu genutzt werden, das Verdampfen des Arbeitsmediums sicher zu stellen, auch wenn die von dem Abgas übertragene Wärmeenergie dafür noch nicht ausreichend ist. Dadurch wird die Umwandlung von Wärmeenergie in mechanische Arbeit in der Expansionsvorrichtung ermöglicht. Um dies zu erreichen, kann der Wärmespeicher vorzugsweise derart ausgestaltet sein, dass die Entladungstemperatur, d.h. die Temperatur des Arbeitsmediums, die durch den Wärmeübergang von dem Wärmespeicher bei den im übrigen herrschenden Bedingungen erreichbar ist, oberhalb der Verdampfungstemperatur des Arbeitsmediums liegt.

Bei einer Integration des Wärmespeichers in den Zwischenkreis kann weiterhin bevorzugt auch ein Bypass des Zwischenkreises vorgesehen sein, durch den der Wärmespeicher bedarfsweise umgehbar ist.

Ein Wärmespeicher kann auch in den Abgasstrang integriert sein und keine Wärmekoppelung zu der Kreisprozessvorrichtung aufweisen. Der Wärmespeicher kann dann beispielsweise dafür eingesetzt werden, nach einem Kaltstart der Brennkraftmaschine oder bei einem Betrieb der Brennkraftmaschine mit dauerhaft geringen Lasten und entsprechend geringen Abgastemperaturen ein schnelles Erreichen oder ein Aufrechterhalten eines Betriebstemperaturbereichs einer bezogen auf den Wärmespeicher stromab in den Abgasstrang integrierten Abgasnachbehandlungseinrichtung zu ermöglichen.

In einer weiterhin bevorzugten Ausgestaltung der erfindungsgemäßen Antriebseinheit kann vorgesehen sein, dass der Wärmeübergang von dem Arbeitsmedium auf das Kühlmedium eines Motorkühlkreises des Verbrennungsmotors erfolgt. Dadurch wird zum einen ermöglicht, die Abwärme des rechtsläufigen Kreisprozesses, die einen Großteil (z.B. ca. 85%) der zugeführten Wärmeenergie darstellen kann, entweder über einen Kühler, insbesondere den Hauptkühler des Kraftfahrzeugs, an die Umgebungsluft abzuführen. Dazu kann vorgesehen sein, dass die in der zweiten Wärmetauschvorrichtung aufgenommene Wärmeenergie stromab des Verbrennungsmotors in den Motorkühlkreis übertragbar ist. Dazu kann zumindest ein Wärmetauscher der zweiten Wärmetauschvorrichtung an dieser Stelle in den Motorkühlkreis integriert sein. Dadurch wird verhindert, dass die aus der Kreisprozessvorrichtung in den Motorkühlkreis überführte Wärmeenergie die Kühlleistung für den Verbrennungsmotor verschlechtert. Zum anderen ermöglicht diese Ausgestaltung der erfindungsgemäßen Antriebseinheit, dass in bestimmten Betriebszuständen, beispielsweise in einer Warmlaufphase nach einem Kaltstart der Brennkraftmaschine, wenn diese (insbesondere die Kühlflüssigkeit des Motorkühlkreises oder das Motoröl) noch nicht den vorgesehenen Betriebstemperaturbereich erreicht hat, die Abwärme der Kreisprozessvorrichtung zur schnelleren Erwärmung des Motorkühlkreislaufs und gegebenenfalls mit dem Motorkühlkreis wärmetauschend verbundener anderer Funktionselemente (z.B. Innenraumheizung, Getriebeöl, Motoröl, etc.) genutzt werden kann. Dabei wird durch die schnelle Erwärmung des Arbeitsmediums mittels des Wärmespeichers auch die von diesem freigesetzte Wärmeenergie entsprechend genutzt.

In einer weiterhin bevorzugten Ausgestaltung der erfindungsgemäßen Antriebseinheit kann vorgesehen sein, dass die Kreisprozessvorrichtung einen Bypass umfasst, durch den die Expansionsvorrichtung umgehbar ist. Dies kann insbesondere vorteilhaft sein, wenn die Entladungstemperatur des Wärmespeichers (zeitweise) unterhalb der Verdampfungstemperatur des Arbeitsmediums liegt. Dann ist zwar die Durchführung des Dampfkreisprozesses ggf. nicht möglich, jedoch kann die Kreisprozessvorrichtung als Transferkreis genutzt werden, um die Wärmeenergie aus dem Wärmespeicher und/oder dem Abgas an das Kühlmittel des Motorkühlkreises zu übertragen. Die Verwendung des Bypasses kann auch sinnvoll sein, wenn eine Umwandlung von thermischer in mechanische Energie mittels der Kreisprozessvorrichtung nicht gewünscht oder erforderlich ist.

Eine konstruktiv einfache Ausgestaltung der erfindungsgemäßen Antriebseinheit kann erreicht werden, wenn der erste Wärmetauscher und der zweite Wärmetauscher voneinander strukturell und insbesondere auch räumlich getrennt und mittels des Zwischenkreises miteinander verbunden sind. Dies ermöglicht eine gute Flexibilität hinsichtlich der Integration der Kreisprozessvorrichtung in ein Kraftfahrzeug.

Eine Wärmetauschvorrichtung mit mindestens einem ersten Wärmetauscher und einem davon strukturell getrennten Wärmetauscher kann aber nachteilig hinsichtlich des erforderlichen Bauraums sein. Um dies zu vermeiden kann vorgesehen sein, dass der Wärmeübergang der aus dem Abgas stammenden Wärmeenergie zunächst auf das Transfermedium und von diesem auf das Arbeitsmedium innerhalb einer strukturellen Einheit erfolgt.

Demnach kann die erste Wärmetauschvorrichtung den (oder einen der) ersten Wärmetauscher und den (oder einen der) zweiten Wärmetauscher integral ausbildenden 3-Medien-Wärmetauscher umfassen, wobei der 3-Medien-Wärmetauscher einen ersten Medienkanal für das Abgas, einen zweiten Medienkanal für das Arbeitsmedium und in zumindest einem Abschnitt einen zwischen dem ersten und dem zweiten Medienkanal angeordneten dritten Medienkanal für das Transfermedium ausbildet, so dass ein Wärmeübergang von dem Abgas auf das Arbeitsmedium über das Transfermedium erfolgt.

Eine kompakte Bauform und ein besonders guter Wärmetausch kann durch die Ausgestaltung des 3-Medien-Wärmetauschers als Plattenwärmetauscher erreicht werden. Dann kann vorgesehen sein, dass (zumindest) der zweite und/oder der dritte Medienkanal (jeweils) in einer Platte ausgebildet ist, wobei die den dritten Medienkanal ausbildende Platte von dem Abgas (zumindest teilweise) umströmt wird. Dabei kann insbesondere vorgesehen sein, dass der zweite und/oder dritte Medienkanal in der jeweiligen Platte mehrfach umgelenkt (z.B. mäanderförmig) verläuft, um die Größe der Platte möglichst vollständig für einen Wärmetausch auszunutzen.

In einer besonders bevorzugten Ausgestaltung der erfindungsgemäßen Wärmetauschvorrichtung kann vorgesehen sein, dass der dritte Medienkanal für das Transfermedium nur in einem Abschnitt der Wärmetauschvorrichtung zwischen dem ersten und dem zweiten Medienkanal angeordnet ist und in einem weiteren Abschnitt dies nicht der Fall ist, so dass ein Wärmeübergang von dem Abgas auf das Arbeitsmedium direkt (d.h. ohne Zwischenschaltung des Transfermediums) erfolgt. Bei einer Ausgestaltung der Wärmetauschvorrichtung als Plattenwärmetauscher kann dies vorzugsweise dadurch erreicht werden, dass die den dritten Medienkanal ausbildende Platte kleiner als die den zweiten Medienkanal ausbildende Platte ist, so dass die den zweiten Medienkanal ausbildende Platte in einem Abschnitt von dem Abgas umströmt wird.

Dadurch kann erreicht werden, dass die thermische Trennung von Abgas und Arbeitsmedium durch das Transfermedium nur solange erfolgt, wie das Abgas eine sehr hohe Temperatur aufweist bzw. aufweisen kann. Sobald dagegen eine ausreichende Abkühlung des Abgases erreicht wurde, kann durch den direkten Wärmeübergang auf das wärmeaufnehmende Medium gegebenenfalls der Gesamtwärmübergang in der Wärmetauschvorrichtung verbessert werden.

Weiterhin bevorzugt kann vorgesehen sein, dass der 3-Medien-Wärmetauscher als Gegenstrom-Wärmetauscher betrieben wird. Demnach wäre die Strömungsrichtung des Abgases in dem ersten Medienkanal gegenläufig zu der Strömungsrichtung des Arbeitsmediums in dem zweiten Medienkanal.

Bezüglich der Strömungsrichtung des Transfermediums in dem dritten Medienkanal kann vorteilhaft sein, wenn diese gleichläufig zu der Strömungsrichtung des Arbeitsmediums in dem zweiten Medienkanal ist.

In einer weiterhin bevorzugten Ausgestaltung der erfindungsgemäßen Wärmetauschvorrichtung kann vorgesehen sein, dass sich der zweite Medienkanal in Strömungsrichtung des Arbeitsmediums aufweitet. Dadurch kann einer durch die Erwärmung begründeten Ausdehnung des Arbeitsmediums Rechnung getragen werden. Insbesondere kann dies die Ausgestaltung des 3-Medien-Wärmetauschers als 3-Medien-Verdampfer ermöglichen, der durch einen Phasenübergang des Arbeitsmediums von der flüssigen in die gasförmige Phase und einer damit verbundenen Zunahme des von dem Arbeitsmediums eingenommenen Volumens innerhalb des 3-Medien-Verdampfers gekennzeichnet ist.

Der 3-Medien-Wärmetauscher kann besonders bevorzugt als mehrschichtiger Plattenwärmetauscher ausgebildet sein. Dazu können eine Mehrzahl erster, zweiter und dritter Medienkanäle vorgesehen sein, wobei die zweiten und dritten Medienkanäle in jeweils einer Platte ausgebildet sind und wobei die die zweiten Medienkanäle ausbildenden Platten jeweils zwischen zwei jeweils einen dritten Medienkanal ausbildenden Platten angeordnet sind und wobei zwischen zwei jeweils einen dritten Medienkanal ausbildenden Platten eine einen ersten Medienkanal ausbildende Platte angeordnet ist.

Ein weiterer Vorteil des erfindungsgemäßen Zwischenkreises liegt darin, dass dieser eine problemlose Integration einer Mehrzahl erster Wärmetauscher in die erste Wärmetauschvorrichtung ermöglicht. So kann neben einer direkten Nutzung der Wärmeenergie des Abgases durch eine Anordnung eines ersten Wärmetauschers in dem Abgasstrom (alternativ oder zusätzlich) auch eine indirekte Nutzung der Abgaswärmeenergie vorgesehen sein. Hierzu können ein oder mehrere (weitere) erste Wärmetauscher an Komponenten (z.B. Abgaskrümmer, Kühler einer Abgasrückführung, Kühler eines Abgasturboladers) des Abgasstrangs (ggf. auch des Motorkühlkreises) vorgesehen sein. Durch den Zwischenkreis kann die in den mehreren ersten Wärmetauschern der ersten Wärmetauschvorrichtung aufgenommene Wärmeenergie gesammelt einer einzigen zweiten Wärmetauschvorrichtung (Verdampfer) der Kreisprozessvorrichtung zugeführt werden.

Um zu verhindern, dass der Wärmeentzug aus dem Abgas durch die Kreisprozessvorrichtung ein schnelles Aufheizen oder den korrekten Betrieb einer Abgasnachbehandlungseinrichtung (z.B. Katalysator(en) und/oder Partikelfilter) behindert, kann vorzugsweise vorgesehen sein, dass ein (direkt im Abgasstrom angeordneter) Wärmetauscher der ersten Wärmetauschvorrichtung hinter der Abgasnachbehandlungseinrichtung in den Abgasstrang integriert ist.

Um eine Überdimensionierung der Kreisprozessvorrichtung und damit regelmäßig einen schlechten Wirkungsgrad bei einem Teillastbetrieb zu vermeiden, kann vorzugsweise vorgesehen sein, dass die Maximalleistung der Kreisprozessvorrichtung im rechtsläufigen Kreisprozess auf den Abgaswärmestrom bei einem Betrieb des Verbrennungsmotors bei Teillast ausgelegt ist. Da die Verbrennungsmotoren heutiger Kraftfahrzeug die meiste Zeit bei Teillast betrieben werden, kann dann ein guter Wirkungsgrad für die Kreisprozessvorrichtung erreicht werden. Wird der Verbrennungsmotor dagegen zeitweise bei oder nahe der Volllast betrieben, kann die dann zusätzliche Wärmeenergie des Abgases, die von der Kreisprozessvorrichtung nicht umsetzbar ist, in dem vorzugsweise vorgesehenen Zwischenspeicher gespeichert werden, um diesen (wieder) aufzuladen.

Bei dem Wärmespeicher kann es sich vorzugsweise um einen Latentwärmespeicher oder einen thermochemischen Speicher handeln. Latentwärmespeicher sind Vorrichtungen, die thermische Energie mit vielen Wiederholzyklen und über lange Zeit speichern können. Man nutzt dazu sogenannte Phasenwechselmaterialien (PCM: "phase change materials"), deren latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Thermochemische Speicher nutzen dagegen die Enthalpie reversibler chemischer Reaktionen, z.B. von auf Chemisorption beruhenden Absorptions- und Desorptionsprozessen.

In einer weiterhin bevorzugten Ausgestaltung der erfindungsgemäßen Antriebseinheit kann vorgesehen sein, dass eine Vorrichtung zur Prognostizierung eines zukünftig (insbesondere direkt anschließend bzw. als nächstes) zu fahrenden Fahrtprofils für das mit der Antriebsvorrichtung versehene Kraftfahrzeug vorgesehen ist, wobei eine Steuerung des Wärmeübergangs auf die Kreisprozessvorrichtung und/oder auf den vorzugsweise vorgesehenen Wärmespeicher und/oder eine Wärmeabgabe von dem Wärmespeicher in Abhängigkeit von dem prognostizierten Fahrtprofil erfolgt.

Vorzugsweise kann vorgesehen sein, dass die Vorrichtung zur Prognostizierung ein Navigationssystem umfasst. Ein Navigationssystem umfasst eine insbesondere satellitengestützte Vorrichtung zur Positionserkennung sowie auswertbare geographische Kartendaten. Derartige Kartendaten können dabei nicht nur Informationen zum Verlauf von Strecken (Straßen, Wege, etc.) umfassen, sondern insbesondere auch Informationen zu der Art von Streckenabschnitten (Autobahn, Landstraße, Stadtstraße, etc.) sowie zu den dort herrschenden Geschwindigkeitsbeschränkungen enthalten. Auch können topographische Daten vorgesehen sein, die insbesondere eine Ermittlung der Steigung oder des Gefälles der Streckenabschnitte ermöglichen. Diese Daten können, insbesondere in Kombination mit dem derzeitigen Fahrverhalten (z.B. aktuelle Geschwindigkeit, Durchschnittsgeschwindigkeit, jeweils insgesamt und auf den unterschiedlichen Straßenarten, etc.) ausgewertet werden und dadurch der zukünftige Lastzustand der Brennkraftmaschine über der Zeit und somit das entsprechende Abgasabwärmeangebot prognostiziert werden. Dieses kann dann möglichst optimal ausgenutzt werden, indem z.B. nur der Kreisprozessvorrichtung, nur dem Wärmespeicher oder, z.B. bei derzeitigem und voraussichtlich weiter andauerndem Betrieb der Brennkraftmaschine mit hoher Last oder Volllast, beiden Komponenten Abwärme zugeführt wird. Auch kann in Abhängigkeit des prognostizierten Abwärmeangebots vorgesehen sein, weder der Kreisprozessvorrichtung noch dem Wärmespeicher Abwärme zuzuführen, beispielsweise um eine Erhöhung des Abgasgegendrucks, den diese durch eine Integration in den Abgasstrang bewirken können, temporär zu vermeiden.

Weiterhin bevorzugt kann vorgesehen sein, dass die Vorrichtung zur Prognostizierung einen Fahrtenprotokollierer umfasst. Mittels des Fahrtenprotokollierers können regelmäßige Fahrten, wie beispielsweise wochentägliche Fahrten zur und von der Arbeitsstelle, vorausgesagt werden, deren Fahrtprofil (u.a. Streckenverlauf, Geschwindigkeitsprofil) dann bekannt sind.

Diesbezüglich kann die Vorrichtung zur Prognostizierung eines zukünftig zu fahrenden Fahrtprofils auch eine Verknüpfung mit einem Dauerkalender oder einem insbesondere online aktualisierbaren Kalender umfassen, wodurch Feiertage und Wochenenden, an denen eine Fahrt zur Arbeitsstelle nicht zu erwarten ist, berücksichtigt werden.

Der Fahrtenprotokollierer kann auch personenbezogene Daten speichern und auswerten. Hierzu kann der Fahrtenprotokollierer die protokollierten Fahrtprofile beispielsweise den einzelnen, individuell konfigurierbaren und damit regelmäßig bestimmten Fahrern zugeordneten Fahrzeugschlüsseln zuordnen.

Der Fahrtenprotokollierer kann insbesondere auch das vergangene individuelle Fahrverhalten des jeweiligen Fahrers auf der aktuellen Fahrt auswerten und zur Prognostizierung des zukünftigen Fahrverhaltens auf dieser Fahrt (ggf. nur kurzzeitig unterbrochen) auswerten.

In einer weiterhin bevorzugten Ausgestaltung der erfindungsgemäßen Antriebseinheit kann vorgesehen sein, dass die Kreisprozessvorrichtung zusätzlich einen Verdichter, der alternativ zu der Expansionsvorrichtung einsetzbar ist, und eine Drossel umfasst, so dass diese auch in einem linksläufigen thermodynamischen Kreisprozess einsetzbar ist, wobei ein (direkter oder indirekter) Wärmeübergang von dem Abgas auf das Arbeitsmedium oder ein (direkter oder indirekter) Wärmeübergang von dem Kühlmedium auf das Arbeitsmedium erfolgt.

Eine solche Ausgestaltung der erfindungsgemäßen Antriebseinheit ermöglicht, insbesondere nach der Beendigung des Betriebs der Brennkraftmaschine nach einem Stillstand des Kraftfahrzeugs, die in den verschiedenen Komponenten der Antriebseinheit gespeicherte Wärmeenergie teilweise weiter zu nutzen.

Demnach kann insbesondere vorgesehen sein, dass die Kreisprozessvorrichtung im Betrieb des Verbrennungsmotors in einem rechtsläufigen Kreisprozess und im Stillstand des Verbrennungsmotors in dem linksläufigen thermodynamischen Kreisprozess betreibbar ist, d.h. zumindest temporär mittels einer entsprechenden Steuerung betrieben wird.

Die in den Komponenten gespeicherten Wärmeenergie kann nach Beendigung des Betriebs der Brennkraftmaschine insbesondere dazu genutzt werden, eine Beheizung eines Innenraums des Kraftfahrzeugs fortzusetzen. Dann kann beispielsweise vorgesehen sein, dass in dem linksläufigen Kreisprozess ein (direkter oder indirekter) Wärmeübergang von dem Abgasstrang auf das Arbeitsmedium und von dem Arbeitsmedium (direkt oder indirekt) auf Luft für eine Klimatisierung des Innenraums des Kraftfahrzeugs erfolgt. Insbesondere kann der Wärmeübergang von dem Arbeitsmedium auf die Luft für die Innenraumklimatisierung unter Zwischenschaltung des Motorkühlkreises erfolgen.

Alternativ oder zusätzlich kann mittels einer solchen Ausgestaltung der Kreisprozessvorrichtung auch die in einem Motorkühlkreis gespeicherte Wärmeenergie vorteilhaft genutzt werden. Hierzu könnte dann vorgesehen sein, dass die zweite Wärmetauschvorrichtung in den Motorkühlkreis des Verbrennungsmotors integriert ist.

Eine Nutzung der in dem Motorkühlkreis gespeicherten Wärmeenergie kann insbesondere dadurch erfolgen, dass diese Wärmeenergie zum Aufladen eines Wärmespeichers genutzt wird. Demnach kann vorgesehen sein, dass in dem linksläufigen Kreisprozess ein (direkter oder indirekter) Wärmeübergang von dem Arbeitsmedium auf den Wärmespeicher erfolgt.

Eine Nutzung der in dem Motorkühlkreis gespeicherten Wärmeenergie kann auch dafür vorgesehen sein, ein bestimmtes Temperaturniveau des (Ab-)Gases im Abgasstrang auch im Nichtbetrieb der Brennkraftmaschine aufrecht zu halten. Dies kann beispielsweise in einem länger andauernden Stop-and-Go-Betrieb des Kraftfahrzeugs mit einem regelmäßig wechselnden Betrieb/Nichtbetrieb der Brennkraftmaschine, z.B. mittels einer Start-Stopp-Automatik, ein Auskühlen einer der ersten Wärmetauschvorrichtung nachgeschalteten Abgasnachbehandlungsvorrichtung verhindern.

In einer weiterhin bevorzugten Ausgestaltung der erfindungsgemäßen Antriebseinheit kann vorgesehen sein, dass der Verdichter und die Expansionsvorrichtung integral ausgebildet sind, d.h. beide Funktionen von einer Maschine erfüllt werden können. Dabei kann es sinnvoll sein, die Strömungsrichtung des Arbeitsmediums in den beiden Kreisprozessen umzukehren. Gleiches kann dann auch für über die erste und zweite Wärmetauschvorrichtung mit der Kreisprozessvorrichtung wärmetauschend verbundene weitere Kreisläufe, insbesondere den Motorkühlkreis und den erfindungsgemäßen Zwischenkreis, sinnvoll sein, um zu ermöglichen, die entsprechenden Wärmetauscher stets im Gegenstrom zu betreiben. Alternativ kann aber auch vorgesehen sein, dass der Verdichter und die Expansionsvorrichtung parallel geschaltet sind.

Da die Pumpe gegebenenfalls nur im rechtsläufigen Kreisprozess und die Drossel gegebenenfalls nur im linksläufigen Kreisprozess eingesetzt werden, kann vorteilhaft vorgesehen sein, dass diese in der Kreisprozessvorrichtung parallel geschaltet sind. Dadurch kann verhindert werden, dass diese den jeweiligen anderen Kreisprozess negativ beeinflussen.

Die Erfindung wird im Folgenden anhand von in den Zeichnungen dargestellten Ausführungsbeispielen näher erläutert. Die Zeichnungen zeigen in
- Fig. 1:: eine erste Ausführungsform einer erfindungsgemäßen Antriebseinheit für ein Kraftfahrzeug in einer schematischen Darstellung;
- Fig. 2:: eine zweite Ausführungsform einer erfindungsgemäßen Antriebseinheit für ein Kraftfahrzeug in einer schematischen Darstellung; und
- Fig. 3:: ein 3-Medien-Verdampfer in einer perspektivischen Darstellung;
- Fig. 4:: der 3-Medien-Verdampfer in einer Explosionsdarstellung;
- Fig. 5:: ein vergrößerter Ausschnitt der Fig. 4;
- Fig. 6:: der 3-Medien-Verdampfer in einer Ansicht von vorne;
- Fig. 7:: eine Prinzipdarstellung des 3-Medien-Verdampfers der Fig. 3 bis 6; und
- Fig. 8:: eine Prinzipdarstellung eines alternativen 3-Medien-Verdampfers.

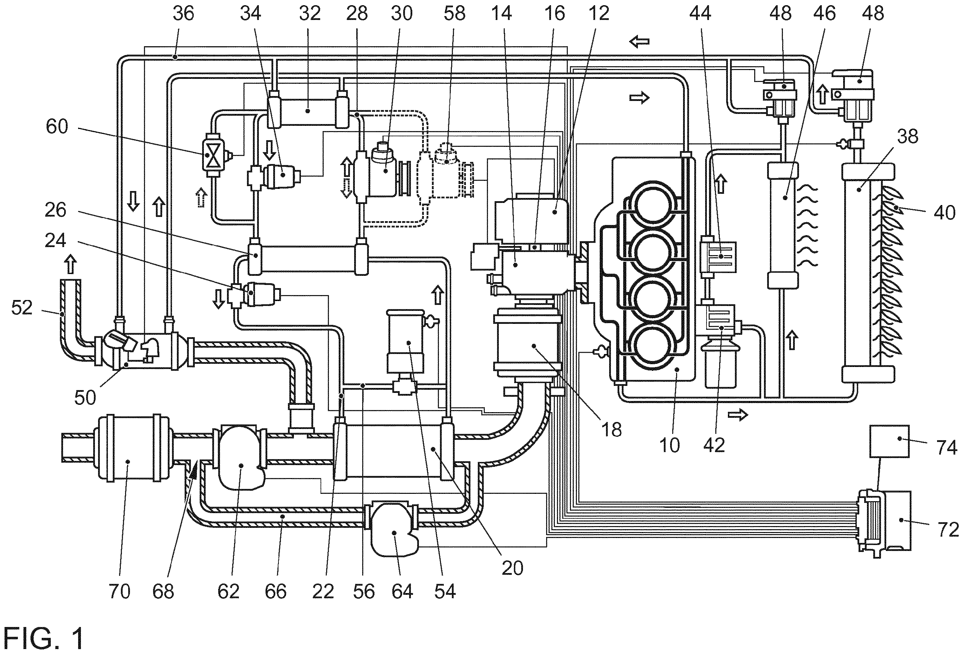

Die in der Fig. 1 dargestellte Antriebseinheit für ein Kraftfahrzeug umfasst eine Brennkraftmaschine mit einem Verbrennungsmotor 10, der beispielsweise als vierzylindriger Hubkolben-Diesel- oder Otto-Verbrennungsmotor ausgebildet ist. In dem Verbrennungsmotor 10 sind somit vier Zylinder ausgebildet, in denen jeweils ein Kolben beweglich gelagert ist. Die Kolben bilden mit den Wänden des dazugehörigen Zylinders jeweils einen Brennraum aus, in dem verdichtetes Frischgas (Luft) mit direkt eingespritztem Kraftstoff verbrannt wird.

Das Frischgas wird dem Verbrennungsmotor über einen zum Großteil nicht dargestellten Frischgasstrang zugeführt. Die Verdichtung des Frischgases erfolgt dabei über den Verdichter 12 eines Abgasturboladers.

Das bei der Verbrennung des Frischgases mit dem Kraftstoff entstehende Abgas wird über einen Abgasstrang aus dem Verbrennungsmotor 10 abgeführt. Dabei durchströmt das Abgas zunächst eine Turbine 14 des Abgasturboladers, die mit dem Verdichter 12 über eine Welle 16 verbunden ist, und anschließend eine erste Abgasnachbehandlungseinrichtung 18, wie beispielsweise einen Katalysator. Stromab der ersten Abgasnachbehandlungseinrichtung 18 ist ein erster Wärmetauscher 20 einer ersten Wärmetauschvorrichtung einer Kreisprozessvorrichtung in den Abgasstrang integriert.

Der erste Wärmetauscher 20 wird zum einen von dem Abgas und zum anderen von einem flüssigen Transfermedium in Form eines temperaturfesten Thermoöls eines Zwischenkreises 22 der Kreisprozessvorrichtung durchströmt, wobei ein Wärmeübergang von dem Abgas auf das Transfermedium erfolgen kann. Mittels einer Medienpumpe 24 des Zwischenkreises 22 wird das Transfermedium gefördert. Dadurch gelangt das von dem Abgas erwärmte Transfermedium zum einen in einen als Verdampfer ausgebildeten zweiten Wärmetauscher 26 der ersten Wärmetauschvorrichtung. :Der Verdampfer wird zum einen von dem Transfermedium und zum anderen von einem Arbeitsmedium eines Arbeitskreises 28 der Kreisprozessvorrichtung durchströmt. Dabei kann ein Wärmeübergang von dem Transfermedium auf das Arbeitsmedium erfolgen. Dieser Wärmeübergang kann zu einem Verdampfen und Überhitzen des Arbeitsmediums in dem Verdampferführen. In einem rechtsläufigen Kreisprozess der Kreisprozessvorrichtung kann der überhitzte Dampf dann in einer Expansionsvorrichtung 30 expandiert werden, wobei mechanische Leistung erzeugt wird, die zur Erzeugung von elektrischer Energie und/oder zum direkten mechanischen Antrieb des Kraftfahrzeugs oder von Nebenaggregaten der Brennkraftmaschine eingesetzt werden kann. In einer zweiten Wärmetauschvorrichtung der Kreisprozessvorrichtung, die in dem vorliegenden Ausführungsbeispiel lediglich einen als Kondensator ausgebildeten Wärmetauscher 32 umfasst, wird das Arbeitsmedium dann abgekühlt und wieder in die flüssige Phase überführt (kondensiert). Eine Medienpumpe 34 des Arbeitskreises sorgt dann für das erneute Zuführen des flüssigen Arbeitsmediums zu dem Verdampfer.

Der Kondensator wird neben dem Arbeitsmedium auch von dem flüssigen Kühlmittel eines Motorkühlkreises 36 durchströmt, wobei während des rechtsläufigen Kreisprozesses ein Wärmeübergang von dem Arbeitsmedium auf das Kühlmittel erfolgt. Die Abwärme des rechtsläufigen Kreisprozesses kann somit insbesondere über einen Hauptkühler 38 der Antriebsvorrichtung an die Umgebungsluft abgegeben werden. Dabei kann die Menge der durch den Hauptkühler 38 strömenden Umgebungsluft mittels verstellbarer Kühlerlamellen 40 automatisch gesteuert werden.

Zusätzlich dazu kann die Abwärme des rechtsläufigen Kreisprozesses in dem Motorkühlkreis 36 auch dazu genutzt werden, das Kühlmittel nach einem Kaltstart der Brennkraftmaschine schneller auf Betriebstemperatur zu bringen oder die Betriebstemperatur in Betriebsphasen des Verbrennungsmotors 10 mit geringen Lasten möglichst zu halten. Dadurch kann ein Abfall der Temperatur des Verbrennungsmotors 10 sowie auch weiterer Komponenten, wie beispielsweise eines Motorölkühlers 42 (und damit des Motoröls) und eines Getriebeölkühlers 44 (und damit des Getriebeöls) vermieden werden. Auch kann die Abwärme des rechtsläufigen Kreisprozesses zur Verbesserung einer Heizwirkung einer Heizungsanlage für einen Innenraum des Kraftfahrzeugs genutzt werden. Hierzu ist ein Wärmetauscher 46 der Heizungsanlage in den Motorkühlkreis 36 integriert.

Über eine entsprechende Ansteuerung von zwei in den Motorkühlkreis 36 integrierten Kühlmittelpumpen 48 sowie von nicht dargestellten Absperrventilen kann bedarfsangepasst der Durchfluss von Kühlmittel durch einzelne Komponenten des Motorkühlkreises 36 geregelt werden. Insbesondere kann während der Warmlaufphase nach einem Kaltstart und bei einem anhaltenden Betrieb des Verbrennungsmotors 10 mit sehr geringen Lasten eine Kühlung des Kühlmittels im Hauptkühler 38 unterbunden werden, wodurch die Betriebstemperatur des Kühlmittels möglichst schnell erreicht oder beibehalten werden kann.

Das Kühlmittel des Motorkühlkreises 36 durchströmt weiterhin einen Kühler 50 einer Niederdruckabgasrückführung 52. Die Niederdruckabgasrückführung 52 zweigt stromab des ersten Wärmetauschers 20 der ersten Wärmetauschvorrichtung aus dem Abgasstrang ab. Mittels Abschaltventilen ist es möglich, die Durchströmung des Kühlers 50 der Niederdruckabgasrückführung 52 zu unterbinden, wobei das gesamte Kühlmittel dann über den Kondensator (Wärmetauscher 32) der Kreisprozessvorrichtung geführt wird.

Die Antriebsvorrichtung umfasst weiterhin einen Wärmespeicher 54, der in einen Bypass 56 des Zwischenkreises 22 zur möglichen Umgehung des ersten Wärmetauschers 20 integriert ist. Der als Latentwärmespeicher ausgebildete Wärmespeicher 54 kann Wärmeenergie aus dem Transfermedium aufnehmen, über einen langen Zeitraum speichern und bei Bedarf wieder an das Transfermedium abgegeben. Insbesondere kann vorgesehen sein, dass der Wärmespeicher 54 Wärmeenergie aus dem Transfermedium aufnimmt, wenn der Verbrennungsmotor 10 mit hohen Lasten betrieben wird. Die dann in dem ersten Wärmetauscher 20 von dem Abgas auf das Transfermedium übertragbare Wärmeenergie kann dann größer sein, als die in dem rechtsläufigen Kreisprozess umsetzbare Wärmeenergie. Die überschüssige Wärmeenergie kann vorteilhaft zum "Aufladen" des Wärmespeichers 54 eingesetzt werden.

Wird der Verbrennungsmotor 10 dagegen in der Warmlaufphase oder mit niedrigen Lasten betrieben, kann die in dem ersten Wärmetauscher 20 auf das Transfermedium übertragene Wärmeenergie geringer sein, als die im rechtsläufigen Kreisprozess umsetzbare Wärmeenergie. Insbesondere kann diese Wärmeenergie so gering sein, dass diese für das Verdampfen und Überhitzen des Arbeitsmediums im Verdampfer nicht ausreicht. Dann kann durch eine entsprechende Ansteuerung des Wärmespeichers 54 die darin gespeicherte Wärmeenergie zunächst an das Transfermedium und dann im Verdampfer an das Arbeitsmedium übertragen werden. Dadurch kann der rechtsläufige Kreisprozess unterstützt oder sogar erst ermöglicht werden.

Sofern die von dem Wärmespeicher 54 und/oder dem Abgas auf das Transfermedium übertragene Wärmeenergie zu gering ist, um das Verdampfen des Arbeitsmediums zu gewährleisten, kann der Arbeitskreis 28 auch als Transferkreis genutzt werden, so dass dann zwar kein rechtsläufiger Kreisprozess durchgeführt wird und dementsprechend von der Expansionsvorrichtung 30 auch keine mechanische Leistung erzeugt wird, jedoch weiterhin ein Übergang von Wärmeenergie von dem Abgas und/oder dem Wärmespeicher 54 auf das Kühlmittel des Motorkühlkreises 36 erfolgen kann. Um zu verhindern, dass dabei die ungenutzte Expansionsvorrichtung 30 von dem dann als Transfermedium dienenden Arbeitsmedium durchströmt werden muss, kann ein nicht dargestellter Bypass zur Umgehung der Expansionsvorrichtung 30 vorgesehen sein.

Die Kreisprozessvorrichtung ist derart ausgebildet, dass diese auch in einem linksläufigen Kreisprozess und insbesondere als Wärmepumpe betrieben werden kann. Dazu ist entweder die Expansionsvorrichtung 30 derart ausgebildet, dass diese auch als Verdichter arbeiten kann, oder ein separater Verdichter 58 ist zu der Expansionsvorrichtung 30 parallel geschaltet in den Arbeitskreis 28 integriert (vgl. gestrichelte Ausgestaltung in der Fig. 1). Weiterhin umfasst der Arbeitskreis 28 eine Drossel 60, die zu der Medienpumpe 34 parallel geschaltet ist.

Während ein Betrieb der Kreisprozessvorrichtung in einem rechtsläufigen Kreisprozess primär während des Betriebs des Verbrennungsmotors 10 vorgesehen ist, um den kontinuierlichen Wärmestrom des Abgases zu nutzen, ist ein Betrieb als Wärmepumpe insbesondere dann vorgesehen, wenn der Verbrennungsmotor 10 nicht mehr in Betrieb ist. Dadurch wird ermöglicht die in verschiedenen Komponenten der Antriebsvorrichtung noch gespeicherte Wärmeenergie weiter zu nutzen.

Insbesondere kann vorgesehen sein, die in dem Wärmespeicher 54 und/oder in dem noch warmen Abgasstrang gespeicherte Wärmeenergie für einen fortgesetzten Betrieb der Innenraumheizung zu verwenden. Hierzu wird das Arbeitsmedium in dem Arbeitskreis 28 von dem von dem Wärmespeicher 54 und/oder dem Abgas erwärmten Transfermedium in dem Verdampfer ggf. auf Unterdruckniveau verdampft, dann im Verdichter verdichtet und auf einem höheren Temperaturniveau im Kondensator unter Wärmeübergang auf das Kühlmittel kondensiert und mittels der Drossel 60 auf den unteren Prozessdruck entspannt. Dabei ist vorgesehen, dass die Strömungsrichtung in dem Arbeitskreis 28 identisch zu derjenigen bei einem Betrieb in einem rechtsläufigen Kreisprozess ist (durchgezogene Pfeile im Arbeitskreis).

Weiterhin kann vorgesehen sein, dass die in dem Motorkühlkreis 28 und insbesondere in dem Kühlmittel gespeicherte Wärmeenergie dazu genutzt wird, den Wärmespeicher 54 nach dem Abstellen des Verbrennungsmotors 10 wieder aufzuladen. Hierzu wird das Arbeitsmedium in dem Arbeitskreis 28 in dem Wärmetauscher 32 der zweiten Wärmetauschvorrichtung (im rechtsläufigen Kreisprozess der Kondensator) durch Wärmeübergang von dem "Kühlmittel" ggf. auf einem Unterdruckniveau verdampft, dann in der als Verdichter arbeitenden Expansionsvorrichtung 30 oder im Verdichter 58 verdichtet und auf einem höheren Temperaturniveau in dem zweiten Wärmetauscher 26 der ersten Wärmetauschvorrichtung (im rechtsläufigen Kreisprozess der Verdampfer) unter Wärmeabgabe auf das Transfermedium kondensiert und mittels der Drossel 60 auf den unteren Prozessdruck entspannt. Von dem erwärmten Transfermedium kann dann ein Wärmeübergang auf den Wärmespeicher 54 erfolgen, um diesen aufzuladen. Dabei ist vorgesehen, dass die Strömungsrichtung in dem Arbeitskreis 28 umgekehrt zu derjenigen bei einem Betrieb während des rechtsläufigen Kreisprozesses ist (gestrichelte Pfeile im Arbeitskreis). Um einen Betrieb der als Verdichter arbeitenden Expansionsvorrichtung 30 oder des Verdichters 58 bei beiden Strömungsrichtungen zu ermöglichen, kann vorgesehen sein, dessen Saug- und Druckseiten mittels einer geeigneten Ventilschaltung (nicht dargestellt) umzukehren. Um ein Erreichen des unteren Prozessdrucks sicherzustellen kann vorgesehen sein, eine Unterdruckpumpe (nicht dargestellt) in den Arbeitskreis 28 zu integrieren.

Der Abgasstrang umfasst noch eine erste Abgasklappe 62, die stromab des ersten Wärmetauschers 20 und der Abzweigung der Niederdruckabgasrückführung 52 in einen Hauptstrang des Abgasstrangs integriert ist, sowie eine zweite Abgasklappe 64, die in einen den ersten Wärmetauscher 20, die Abzweigung der Niederdruckabgasrückführung 52 und die erste Abgasklappe 62 umgehenden Bypass 66 integriert ist. Mittels der Abgasklappen 62, 64 ist es möglich, den Abgasstrom bei Bedarf über den Bypass 66 an dem ersten Wärmetauscher 20 und der Niederdruckabgasrückführung 52 vorbei zu leiten. Dies kann insbesondere erfolgen, wenn nach einem Kaltstart zunächst ein stromab auch der Zuführmündung 68 des Bypasses 66 angeordnete zweite Abgasnachbehandlungseinrichtung 70 (z.B. ein Dieselpartikelfilter) möglichst schnell auf Betriebstemperatur gebracht werden soll, oder wenn der teilweise erhebliche Abgasgegendruck, den der erste Wärmetauscher 20 bewirken kann, temporär vermieden werden soll.

Sämtliche ansteuerbare Komponenten der Antriebsvorrichtung werden von einem Motorsteuergerät 72 angesteuert. Diese sind somit vorzugsweise elektrisch ansteuer- und betätigbar ausgestaltet, können aber auch pneumatisch oder hydraulisch betätigt sein, wozu elektrisch ansteuerbare, pneumatisch oder hydraulisch wirkende Aktoren vorgesehen sein können.

Die Ansteuerung der Komponenten von dem Motorsteuergerät 72 kann in Abhängigkeit von Signalen eines Navigationssystems 74 der Antriebsvorrichtung bzw. des Kraftfahrzeugs erfolgen. Dadurch kann u.a. in Abhängigkeit von einem prognostizierten Fahrtprofil vorgesehen sein, den Wärmespeicher 54 zu laden oder zu entladen, um eine möglichst optimale Nutzung der Wärmeenergie des Abgases zu erreichen.

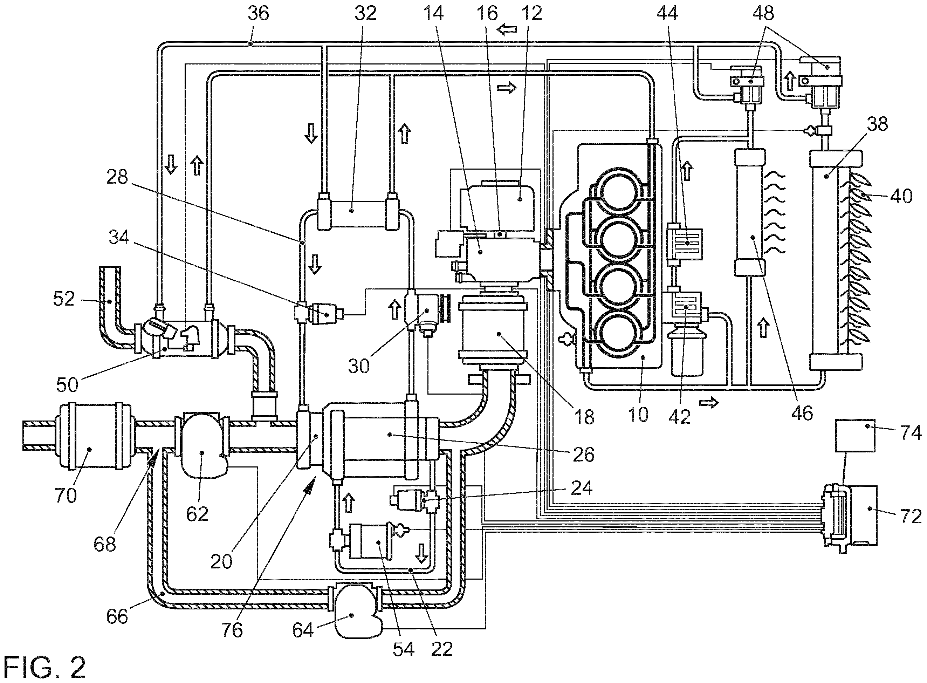

Die in der Fig. 2 dargestellte Ausführungsform einer Antriebseinheit unterscheidet sich von derjenigen der Fig. 1 zum einen darin, dass die Kreisprozessvorrichtung nicht so ausgebildet ist, dass diese auch in einem linksläufigen Kreisprozess einsetzbar ist.

Weiterhin ist die erste Wärmetauschvorrichtung der Kreisprozessvorrichtung derart ausgebildet, dass diese den ersten Wärmetauscher 20 und den zweiten Wärmetauscher 26 in einem 3-Medienwärmetauscher, der konkret als 3-Medien-Verdampfer 76 ausgebildet ist, integriert. Dieser wird von dem Abgas als erstem Medium, dem Arbeitsmedium des Arbeitskreises 28 als zweitem Medium und von dem Transfermedium des Zwischenkreises 22 als drittem Medium durchströmt. Dabei ist vorgesehen, dass durch eine entsprechende Anordnung der die einzelnen Medien führenden Kanäle des 3-Medien-Verdampfers 76 das Transfermedium zumindest in einem Abschnitt der gemeinsamen Durchströmungslänge von Abgas und Arbeitsmedium zwischen dem Abgas und dem Arbeitsmedium angeordnet ist, so dass dieses bzw. der Zwischenkreis 22 die Funktion eines Wärmedämpfers und -puffers ausüben kann.

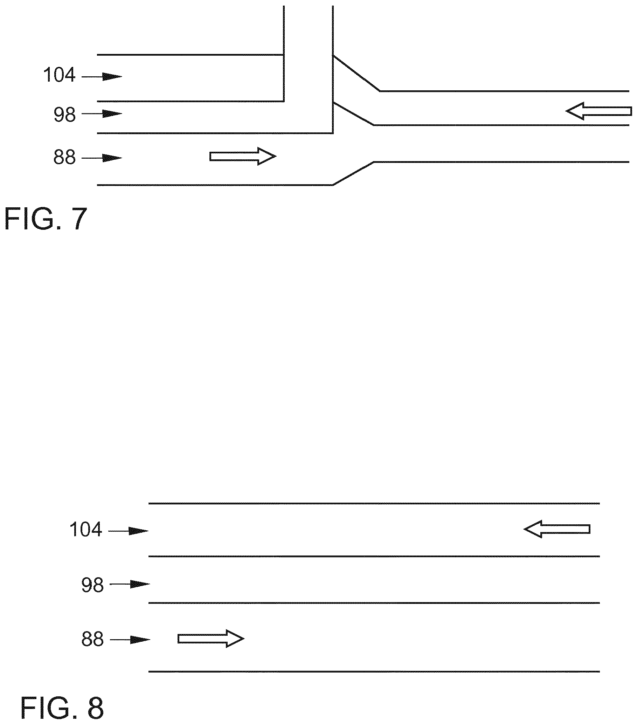

Prinzipdarstellungen zur Funktionsweise des 3-Medienwärmetauschers bzw. 3-Medien-Verdampfers 76 sind in den Fig. 7 und 8 dargestellt.

Dabei zeigt die Fig. 8 eine Prinzipdarstellung eines 3-Medien-Wärmetauschers, bei dem das Transfermedium über die gesamte Durchströmungslänge zwischen dem Abgas und dem Arbeitsmedium angeordnet ist.

In der Fig. 7 erstreckt sich der das Transfermedium führende Medienkanal dagegen nur über einen ersten Abschnitt der Durchströmungslänge, so dass in einem zweiten Abschnitt ein direkter Wärmeübergang von dem Abgas auf das Arbeitsmedium möglich ist. Dabei ist vorgesehen, dass der erste Abschnitt eingangsseitig des 3-Medien-Wärmetauschers bezüglich der Abgasströmung vorgesehen ist. Dadurch wirkt das Transfermedium als Wärmedämpfer in dem ersten Abschnitt, in dem das Abgas noch eine so hohe Temperatur aufweisen kann, die zu einer negativen Beeinflussung des Arbeitsmediums führen kann, während in dem zweiten Abschnitt, in dem das Abgas bereits auf eine unschädliche Temperatur heruntergekühlt wurde, ein direkter Wärmeübergang auf das Arbeitsmedium vorgesehen ist. Durch die dann höhere Temperaturdifferenz zwischen den zwei wärmetauschenden Medien kann der Gesamtwärmeübergang in dem 3-Medien-Wärmetauscher verbessert werden.

In beiden Ausführungsformen ist vorgesehen, dass die Strömungsrichtungen von Abgas und Arbeitsmedium entgegengesetzt sind. Die Strömung des Transfermedium kann in beide Richtungen erfolgen. In der Antriebseinheit gemäß der Fig. 2 entspricht die Durchströmungsrichtung des Transfermediums derjenigen des Arbeitsmediums.

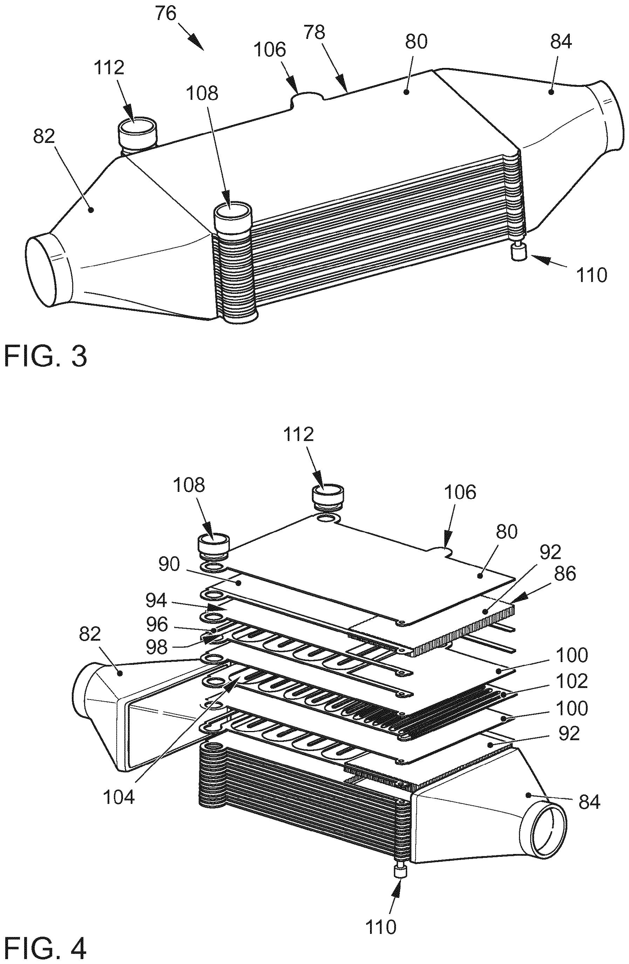

Die Fig. 3 bis 6 zeigen eine Ausführungsform eines der Prinzipdarstellung gemäß der Fig. 7 entsprechenden 3-Medien-Verdampfers 76.

Der 3-Medien-Verdampfer 76 ist als mehrschichtiger Plattenwärmetauscher ausgebildet, wobei die einzelnen Platten eine oder mehrere Medienkanäle für das jeweilige durchströmende Medium ausbilden. Die übereinander geschichteten Platten bilden einen Grundkörper 78 des 3-Medien-Verdampfers 76 aus, in dem der Wärmetausch stattfindet. Ober- und unterseitig ist der Grundkörper 78 durch zwei Deckplatten 80 begrenzt. Einlass- und auslassseitig schließen sich an den Grundkörper 78 ein Einlasstrichter 82 und ein Auslasstrichter 84 für das Abgas an, über die der 3-Medien-Verdampfer 76 in eine Verrohrung eines Abgasstrangs einer erfindungsgemäßen Antriebseinheit integriert sein kann.

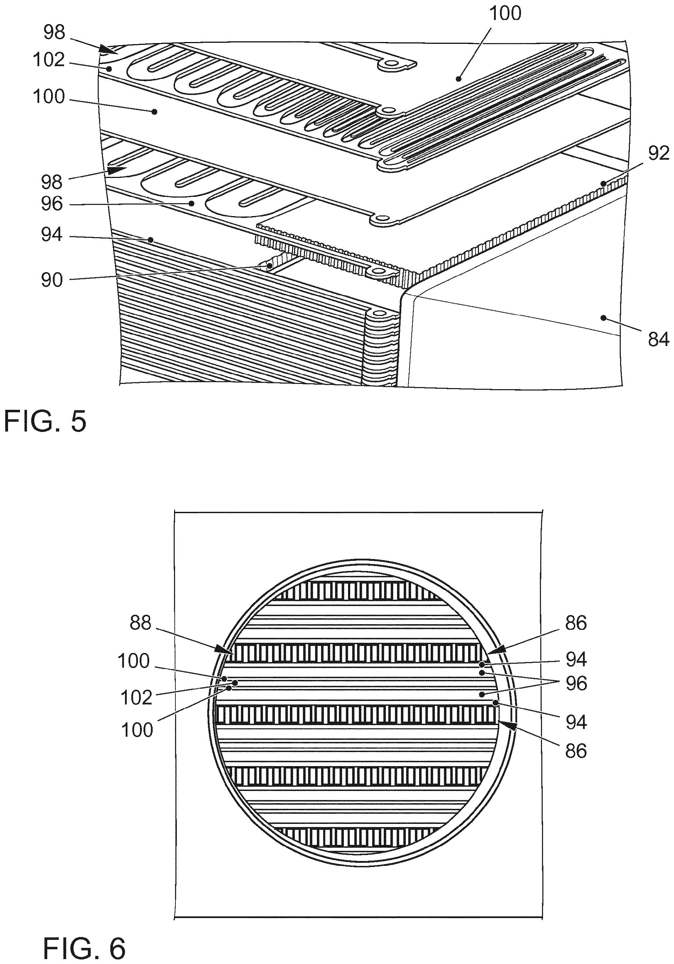

Das durch den Einlasstrichter 82 eintretende Abgas durchströmt die zur Führung des Abgases durch den Grundkörper 78 vorgesehenen Abgas-Platten 86, die, wie sich insbesondere aus der Fig. 6 ergibt, eine Vielzahl von kleinen Medienkanälen 88 für das Abgas ausbilden. Durch die Vielzahl an kleinen Medienkanälen 88 kann die Gesamtgröße der Kontaktfläche zwischen dem Abgas und den Abgas-Platten 86 groß ausgebildet werden, was unter Berücksichtigung des relativ schlechten Wärmeübergangskoeffizienten des Abgases einen ausreichenden Wärmeübergang aus dem Abgas sicherstellt. Die Abgas-Platten 86 bilden zwei Abschnitte aus, die sich hinsichtlich ihrer Plattenstärken unterscheiden. In einem ersten, dem Einlasstrichter 82 benachbarten Abschnitt 90, ist die Plattenstärke geringer als in einem zweiten, dem Auslasstrichter 84 benachbarten Abschnitt 94. In Schichtungsrichtung gesehen schließt sich beidseitig an jede Abgasplatte 86 entweder eine Deckplatte 80 (außenseitig der zwei äußersten Abgasplatten 86) oder eine erste Zwischenplatte 94 an. Die ersten Zwischenplatten 94 sind derart ausgebildet, dass diese ihren den zweiten Abschnitt 92 der Abgas-Platten 86 überdeckenden Abschnitt aussparen.

Auf der der Abgasplatte 86 abgewandten Seite jeder ersten Zwischenplatte 94 ist jeweils eine Transfermedium-Platte 96 angeordnet. Diese bilden jeweils einen Medienkanal 98 aus, der in Schichtungsrichtung beidseitig offen ist und sich schlangen- bzw. mäanderförmig zwischen einem Einlass- und einem Auslassabschnitt erstreckt. Dabei sparen die Transfermedium-Platten 96 ebenfalls ihren den zweiten Abschnitt 92 der Abgas-Platten 86 überdeckenden Abschnitt aus.

Auf der der ersten Zwischenplatte 94 abgewandten Seite jeder Transfermedium-Platte 96 ist jeweils eine zweite Zwischenplatte 100 angeordnet, die den gesamten Horizontalquerschnitt des Grundkörpers 78 und somit auch den zweiten Abschnitt 92 der Abgas-Platten 86 abdeckt.

Die Stärke des zweiten Abschnitts 92 jeder Abgas-Platte 86 ist derart ausgebildet, dass sich diese durch die Aussparungen der benachbarten erste Zwischenplatte 94 und Transfermedium-Platte 96 erstreckt und die zweite Zwischenplatte 100 in dem entsprechenden Abschnitt kontaktiert.

Auf der der Transfermedium-Platte 96 abgewandten Seite jeder zweiten Zwischenplatte 100 ist jeweils eine Arbeitsmedium-Platte 102 angeordnet. Diese bilden jeweils einen Medienkanal 104 aus, der in Schichtungsrichtung beidseitig offen ist und sich schlangen- bzw. mäanderförmig zwischen einem Einlass- und einem Auslassabschnitt für das Arbeitsmedium erstrecken. Dabei decken die Arbeitsmedium-Platten 102 den gesamten Horizontalquerschnitt des Grundkörpers 78 ab und die Medienkanäle 104 nutzen so gut wie möglich den gesamten Horizontalquerschnitt des Grundkörpers 78 aus.

Der zuvor beschriebene Schichtungsaufbau stellt eine Schichtungsstruktur dar, die mit wechselnder Schichtungsrichtung, mehrfach aufeinandergeschichtet den Grundkörper 78 ausbildet. Jede Arbeitsmedium-Platte 102 ist somit beidseitig von einer zweiten Zwischenplatte 100 umgegeben, an die sich jeweils eine Transfermedium-Platte 96, dann eine erste Zwischenplatte 94, dann eine Abgas-Platte 86 und dann entweder erneut eine zweite Zwischenplatte 100 oder eine Deckplatte 80 anschließt.

Durch die Aussparungen der ersten Zwischenplatten 94 und der Transfermedium-Platten 96 für den zweiten Abschnitt 92 der Abgas-Platten 86 wird der direkte (die für die physische Trennung von Abgas und Arbeitsmedium erforderliche Zwischenschaltung der zweiten Zwischenplatten 100 ausgenommen) Wärmeübergang zwischen dem Abgas und dem Arbeitsmedium in dem zweiten Abschnitt des 3-Medien-Verdampfers erzielt, wie dies in der Fig. 7 schematisch dargestellt ist.

Die von den Arbeitsmedium-Platten 102 ausgebildeten Medienkanäle 104 verbreitern sich ausgehend von den Einlassabschnitten kontinuierlich bis zu den Auslassabschnitten. Dadurch wird der Volumenzunahme des Arbeitsmediums beim Übergang von der flüssigen in die gasförmige Phase Rechnung getragen.

Einlässe und Auslässe für das Transfermedium und das Arbeitsmedium werden durch sich überdeckende, sich in Schichtungsrichtung erstreckende Durchgangsöffnungen in allen Platten (in den Deckplatten nur teilweise) ausgebildet, die bei dem Einlass 106 und dem Auslass 108 für das Transfermedium mit dem jeweiligen Medienkanal 98 in jeder der Transfermedium-Platten 96 verbunden sind und bei dem Einlass 110 und dem Auslass 112 für das Arbeitsmedium mit dem jeweiligen Medienkanal 104 in jeder der Arbeitsmedium-Platten 102 verbunden sind.

### Bezugszeichenliste

- 10: Verbrennungsmotor
- 12: Verdichter des Abgasturboladers
- 14: Turbine des Abgasturboladers
- 16: Welle des Abgasturboladers
- 18: erste Abgasnachbehandlungseinrichtung
- 20: erster Wärmetauscher der ersten Wärmetauschvorrichtung
- 22: Zwischenkreis
- 24: Medienpumpe des Zwischenkreises
- 26: zweiter Wärmetauscher der ersten Wärmetauschvorrichtung
- 28: Arbeitskreis
- 30: Expansionsvorrichtung
- 32: Wärmetauscher der zweiten Wärmetauschvorrichtung
- 34: Medienpumpe des Arbeitskreises
- 36: Motorkühlkreis
- 38: Hauptkühler
- 40: Lamellen
- 42: Motorölkühler
- 44: Getriebeölkühler
- 46: Wärmetauscher der Heizungsanlage
- 48: Kühlmittelpumpe
- 50: Kühler der Niederdruckabgasrückführung
- 52: Niederdruckabgasrückführung
- 54: Wärmespeicher
- 56: Bypasses des Zwischenkreises
- 58: Verdichter des Arbeitskreises
- 60: Drossel
- 62: erste Abgasklappe
- 64: zweite Abgasklappe
- 66: Bypass des Abgasstrangs
- 68: Zuführmündung
- 70: zweite Abgasnachbehandlungseinrichtung
- 72: Motorsteuergerät
- 74: Navigationssystem
- 76: 3-Medien-Verdampfer
- 78: Grundkörper
- 80: Deckplatte
- 82: Einlasstrichter
- 84: Auslasstrichter
- 86: Abgas-Platte
- 88: Medienkanal in einer Abgas-Platte
- 90: erster Abschnitt einer Abgas-Platte
- 92: zweiter Abschnitt einer Abgas-Platte
- 94: erste Zwischenplatte
- 96: Transfermedium-Platte
- 98: Medienkanal in einer Transfermedium-Platte
- 100: zweite Zwischenplatte
- 102: Arbeitsmedium-Platte
- 104: Medienkanal in einer Arbeitsmedium-Platte
- 106: Einlass für das Transfermedium
- 108: Auslass für das Transfermedium
- 110: Einlass für das Arbeitsmedium
- 112: Auslass für das Arbeitsmedium

## Patentansprüche

1. Antriebseinheit für ein Kraftfahrzeug mit
- einer Brennkraftmaschine, die einen Verbrennungsmotor (10) sowie einen Abgasstrang, über den Abgas aus dem Verbrennungsmotor (10) abführbar ist, umfasst, sowie mit
- einer Kreisprozessvorrichtung , die zur Wandlung der in dem Abgas enthaltenen Wärmeenergie in einem rechtsläufigen thermodynamischen Kreisprozess in mechanische Arbeit einsetzbar ist, wobei der Kreisprozess
- einen Wärmeübergang von dem Abgas auf ein Arbeitsmedium in einer ersten Wärmetauschvorrichtung umfasst, wodurch die Temperatur und/oder der Druck des Arbeitsmediums erhöht wird,
- eine Expansion des Arbeitsmediums in einer Expansionsvorrichtung (30) zur Erzeugung der mechanischen Arbeit umfasst, und
- einen Wärmeübergang von dem Arbeitsmedium auf ein Kühlmedium in einer zweiten Wärmetauschvorrichtung umfasst
wobei die erste Wärmetauschvorrichtung einen ersten Wärmetauscher (20) und einen zweiten Wärmetauscher (26) sowie einen Zwischenkreis (22) mit einem Transfermedium umfasst, wobei in dem ersten Wärmetauscher (20) Wärmeenergie von dem Abgas auf das Transfermedium und in dem zweiten Wärmetauscher (22) Wärmeenergie von dem Transfermedium auf das Arbeitsmedium übergeht, **dadurch gekennzeichnet, dass** das Transfermedium ein Thermoöl ist.

2. Antriebseinheit gemäß Anspruch 1, **dadurch gekennzeichnet, dass** der rechtsläufige Kreisprozess ein Dampfkreisprozess ist, wobei das Arbeitsmedium im flüssigen Zustand mittels einer Pumpe druckerhöht wird, in der ersten Wärmetauschvorrichtung verdampft und in der zweiten Wärmetauschvorrichtung kondensiert.

3. Antriebseinheit gemäß Anspruch 1 oder 2, **gekennzeichnet durch** einen in die Kreisprozessvorrichtung integrierten Wärmespeicher (54).

4. Antriebseinheit gemäß Anspruch 3, **dadurch gekennzeichnet, dass** der Wärmespeicher (54) in den Zwischenkreis (22) intergiert ist.

5. Antriebseinheit gemäß einem der Ansprüche 3 oder 4, **dadurch gekennzeichnet, dass** der Wärmeübergang von dem Wärmespeicher (54) auf das Arbeitsmedium in oder stromauf der ersten Wärmetauschvorrichtung erfolgt.

6. Antriebseinheit gemäß einem der vorhergehenden Ansprüche, **dadurch gekennzeichnet, dass** der Wärmeübergang von dem Arbeitsmedium auf das Kühlmittel eines Motorkühlkreises (36) des Verbrennungsmotors (10) erfolgt.

7. Antriebseinheit gemäß einem der vorhergehenden Ansprüche, **dadurch gekennzeichnet, dass** der erste Wärmetauscher (20) und der zweite Wärmetauscher (26) voneinander räumlich getrennt und mittels des Zwischenkreises (22) miteinander verbunden sind.

8. Antriebseinheit gemäß einem der vorhergehenden Ansprüche, **dadurch gekennzeichnet, dass** die erste Wärmetauschvorrichtung einen den ersten Wärmetauscher (20) und den zweiten Wärmetauscher (26) integral ausbildenden 3-Medien-Wärmetauscher umfasst, wobei der 3-Medien-Wärmetauscher einen ersten Medienkanal (88) für das Abgas, einen zweiten Medienkanal (104) für das Arbeitsmedium und in zumindest einem Abschnitt einen zwischen dem ersten Medienkanal (88) und dem zweiten Medienkanal (104) angeordneten dritten Medienkanal (98) für das Transfermedium ausbildet, so dass ein Wärmeübergang von dem Abgas auf das Arbeitsmedium über das Transfermedium erfolgt.

9. Antriebseinheit gemäß Anspruch 8, **dadurch gekennzeichnet, dass** der zweite Medienkanal (104) und/oder der dritte Medienkanal (98) in einer Platte (96, 102) ausgebildet ist, wobei die den dritten Medienkanal (98) ausbildende Platte (96) von dem Abgas umströmt wird.

10. Antriebseinheit gemäß Anspruch 8 oder 9, **dadurch gekennzeichnet, dass** sich der zweite Medienkanal (104) in dessen vorgesehener Durchströmungsrichtung aufweitet.

## Claims

1. Drive unit for a motor vehicle, having
- a combustion machine which comprises an internal combustion engine (10) and an exhaust-gas tract via which exhaust gas can be discharged from the internal combustion engine (10), and having
- a cycle process apparatus which can be used for converting the heat energy contained in the exhaust gas into mechanical work in a clockwise thermodynamic cycle process, wherein the cycle process comprises
- a transfer of heat from the exhaust gas to a working medium in a first heat exchange apparatus, whereby the temperature and/or the pressure of the working medium are/is increased,
- an expansion of the working medium in an expansion apparatus (30) in order to generate the mechanical work, and
- a transfer of heat from the working medium to a cooling medium in a second heat exchange apparatus,
wherein the first heat exchange apparatus comprises a first heat exchanger (20) and a second heat exchanger (26) and an intermediate circuit (22) with a transfer medium, wherein, in the first heat exchanger (20), heat energy is transferred from the exhaust gas to the transfer medium, and in the second heat exchanger (22), heat energy is transferred from the transfer medium to the working medium, **characterized in that** the transfer medium is a thermal oil.

2. Drive unit according to Claim 1, **characterized in that** the clockwise cycle process is a steam cycle process, wherein the working medium in the liquid state is subjected to a pressure increase by means of a pump, is evaporated in the first heat exchange apparatus and is condensed in the second heat exchange apparatus.

3. Drive unit according to Claim 1 or 2, **characterized by** a heat store (54) integrated into the cycle process apparatus.

4. Drive unit according to Claim 3, **characterized in that** the heat store (54) is integrated into the intermediate circuit (22).

5. Drive unit according to either of Claims 3 and 4, **characterized in that** the transfer of heat from the heat store (54) to the working medium takes place in or upstream of the first heat exchange apparatus.

6. Drive unit according to any of the preceding claims, **characterized in that** the transfer of heat takes place from the working medium to the cooling medium of an engine cooling circuit (36) of the internal combustion engine (10).

7. Drive unit according to any of the preceding claims, **characterized in that** the first heat exchanger (20) and the second heat exchanger (26) are spatially separate from one another and are connected to one another by means of the intermediate circuit (22).

8. Drive unit according to any of the preceding claims, **characterized in that** the first heat exchange apparatus comprises a 3-media heat exchanger which integrally forms the first heat exchanger (20) and the second heat exchanger (26), wherein the 3-media heat exchanger forms a first media channel (88) for the exhaust gas, a second media channel (104) for the working medium and, in at least one portion, a third media channel (98), arranged between the first media channel (88) and the second media channel (104), for the transfer medium, such that a transfer of heat takes place from the exhaust gas to the working medium via the transfer medium.

9. Drive unit according to Claim 8, **characterized in that** the second media channel (104) and/or the third media channel (98) are/is formed in a plate (96, 102), wherein the plate (96) which forms the third media channel (98) is flowed around by the exhaust gas.

10. Drive unit according to Claim 8 or 9, **characterized in that** the second media channel (104) widens in its intended throughflow direction.

## Revendications

1. Unité d'entraînement pour un véhicule automobile, comprenant
- un moteur à combustion interne qui comporte un moteur thermique (10) ainsi qu'une ligne d'échappement par le biais de laquelle les gaz d'échappement peuvent être évacués du moteur thermique (10), et comprenant
- un dispositif à cycle qui peut être utilisé pour la conversion en travail mécanique de l'énergie thermique contenue dans les gaz d'échappement, dans un cycle thermodynamique dans le sens horaire, le cycle
- comportant un transfert de chaleur des gaz d'échappement à un fluide de travail dans un premier dispositif d'échange de chaleur, de telle sorte que la température et/ou la pression du fluide de travail soient augmentées,
- comportant une détente du fluide de travail dans un dispositif de détente (30) pour produire le travail mécanique, et
- comportant un transfert de chaleur du fluide de travail à un liquide de refroidissement dans un deuxième dispositif d'échange de chaleur,
le premier dispositif d'échange de chaleur comportant un premier échangeur de chaleur (20) et un deuxième échangeur de chaleur (26) ainsi qu'un circuit intermédiaire (22) doté d'un fluide de transfert, de l'énergie thermique passant des gaz d'échappement au fluide de transfert dans le premier échangeur de chaleur (20) et de l'énergie thermique passant du fluide de transfert au fluide de travail dans le deuxième échangeur de chaleur (22), **caractérisée en ce que** le fluide de transfert est une huile thermique.

2. Unité d'entraînement selon la revendication 1, **caractérisée en ce que** le cycle dans le sens horaire est un cycle de vapeur, le fluide de travail à l'état liquide étant soumis à une augmentation de pression au moyen d'une pompe, vaporisé dans le premier dispositif d'échange de chaleur et condensé dans le deuxième dispositif d'échange de chaleur.

3. Unité d'entraînement selon la revendication 1 ou 2, **caractérisée par** un accumulateur de chaleur (54) intégré dans le dispositif à cycle.

4. Unité d'entraînement selon la revendication 3, **caractérisée en ce que** l'accumulateur de chaleur (54) est intégré dans le circuit intermédiaire (22).

5. Unité d'entraînement selon la revendication 3 ou 4, **caractérisée en ce que** le transfert de chaleur de l'accumulateur de chaleur (54) au fluide de travail s'effectue dans le premier dispositif d'échange de chaleur ou en amont de celui-ci.

6. Unité d'entraînement selon l'une quelconque des revendications précédentes, **caractérisée en ce que** le transfert de chaleur s'effectue du fluide de travail au liquide de refroidissement d'un circuit de refroidissement (36) du moteur thermique (10).

7. Unité d'entraînement selon l'une quelconque des revendications précédentes, **caractérisée en ce que** le premier échangeur de chaleur (20) et le deuxième échangeur de chaleur (26) sont séparés spatialement l'un de l'autre et sont reliés l'un à l'autre au moyen du circuit intermédiaire (22).

8. Unité d'entraînement selon l'une quelconque des revendications précédentes, **caractérisée en ce que** le premier dispositif d'échange de chaleur comporte un échangeur de chaleur à 3 fluides formant d'un seul tenant le premier échangeur de chaleur (20) et le deuxième échangeur de chaleur (26), l'échangeur de chaleur à 3 fluides formant un premier conduit de fluide (88) pour les gaz d'échappement, un deuxième conduit de fluide (104) pour le fluide de travail et, dans au moins une partie, un troisième conduit de fluide (98), disposé entre le premier conduit de fluide (88) et le deuxième conduit de fluide (104), pour le fluide de transfert, de telle sorte qu'un transfert de chaleur des gaz d'échappement au fluide de travail s'effectue par le biais du fluide de transfert.

9. Unité d'entraînement selon la revendication 8, **caractérisée en ce que** le deuxième conduit de fluide (104) et/ou le troisième conduit de fluide (98) sont formés dans une plaque (96, 102), les gaz d'échappement s'écoulant autour de la plaque (96) formant le troisième conduit de fluide (98).

10. Unité d'entraînement selon la revendication 8 ou 9, **caractérisée en ce que** le deuxième conduit de fluide (104) s'élargit dans son sens d'écoulement prévu.
